# EUROPEAN PATENT APPLICATION

(11) **EP 3 734 415 A1**
(43) Date of publication of application: **04.11.2020**
(21) Application number: 19171728.9
(22) Date of filing: 30.04.2019
(51) Int. Cl.: G06F 3/01, A63F 13/213

(54) **HEAD MOUNTED DISPLAY SYSTEM SWITCHABLE BETWEEN A FIRST-PERSON PERSPECTIVE MODE AND A THIRD-PERSON PERSPECTIVE MODE, RELATED METHOD AND RELATED NON-TRANSITORY COMPUTER READABLE STORAGE MEDIUM**

(71) Applicant: XRSpace CO., LTD., Taoyuan City 330 (TW)
(72) Inventor: Chen, Wei-Shuo, 807 Kaohsiung City (TW)
(74) Representative: Straus, Alexander

(57) **Abstract**

The present disclosure discloses a head mounted display system (1, 1', 1", 1'") switchable between a first-person perspective mode and a third-person perspective mode. The head mounted display system (1, 1', 1", 1'") includes a wearable body (11, 11', 11", 11'"), a display unit (12, 12', 12", 12"') and a processing unit (13, 13', 13", 13'"). The display unit (12, 12', 12", 12"') is for displaying a scene in the first-person perspective mode or in the third-person perspective mode. The processing unit (13, 13', 13", 13"') is configured to generate a switching command in response to an activating command, so as to indicate the display unit (12, 12', 12", 12"') to switch from the first-person perspective mode to the third-person perspective mode, or to switch from the third-person perspective mode to the first-person perspective mode, which allows the user get away from a stopping state or a stuck state, or understand a current position or a current state in the virtual environment, which significantly enhances user experience.

## Description

### Field of the Invention

The present disclosure relates to a head mounted display system switchable between a first-person perspective mode and a third-person perspective mode, a related method and a related non-transitory computer readable storage medium according to the pre-characterizing clauses of claims 1, 8 and 13.

### Background of the Invention

With the advancement and development of technology, the demand of interactions between a computer game and a user is increased. Human-computer interaction technology, e.g. somatosensory games, virtual reality (VR) environment, augmented reality (AR) environment, mixed reality (MR) environment and extended reality (XR) environment, becomes popular because of its physiological and entertaining function. In order to enhance immersive experience of the human-computer interaction technology, a conventional display apparatus, such as a head mounted display (HMD), usually displays a scene from a first-person perspective. However, sometimes the user gets confused easily because the scene from the first-person perspective does not allow the user to understand a current position or a current state of an avatar in a virtual environment, which results in inconvenience in the immersive experience.

### Summary of the Invention

This is mind, the present disclosure aims at providing a head mounted display system switchable between a first-person perspective mode and a third-person perspective mode, a related method and a related non-transitory computer readable storage medium for helping a user to get away from a stopping state or a stuck state of an avatar played by the user, or to understand a current position or a current state of the avatar played by the user in a virtual environment.

This is achieved by a head mounted display system switchable between a first-person perspective mode and a third-person perspective mode, a related method and a related non-transitory computer readable storage medium according to claims 1, 8 and 13. The dependent claims pertain to corresponding further developments and improvements.

As will be seen more clearly from the detail description following below, the claimed head mounted display system includes a wearable body, a display unit and a processing unit. The wearable body is configured to be worn by a user. The display unit is mounted on the wearable body and configured to display a scene in a first-person perspective mode or in a third-person perspective mode. The processing unit is coupled to the display unit and configured to generate a switching command in response to an activating command. The switching command indicates the display unit to switch from the first-person perspective mode to the third-person perspective mode, or to switch from the third-person perspective mode to the first-person perspective mode.

Furthermore, the claimed method of switching a head mounted display system between a first-person perspective mode and a third-person perspective mode includes utilizing a display unit of the head mounted display system to display a scene in the first-person perspective mode or in the third-person perspective mode; and utilizing a processing unit of the head mounted display system to generate a switching command in response to an activating command to indicate the display unit to switch from the first-person perspective mode to the third-person perspective mode, or to switch from the third-person perspective mode to the first-person perspective mode.

Besides, the claimed non-transitory computer readable storage medium stores a program that causes the aforementioned head mounted display system to execute the aforementioned method.

In summary, the present disclosure utilizes the processing unit for generating the switching command in response to the activating command to indicate the display unit to switch between the first-person perspective mode and the third-person perspective mode. Therefore, it allows a user to switch the display unit between the first-person perspective mode and the third-person perspective mode by different ways to, for example, help the user to get away from a stopping state or a stuck state of the avatar played by the user, or to understand a current position or a current state of the avatar played by the user in a virtual environment, which significantly enhances user experience.

These and other objectives of the present disclosure will no doubt become obvious to those of ordinary skill in the art after reading the following detailed description of the preferred embodiment that is illustrated in the various figures and drawings.

### Brief Description of the Drawings

In the following, the disclosure is further illustrated by way of example, taking reference to the accompanying drawings. Thereof
FIG. 1 is a diagram of a head mounted display system according to a first embodiment of the present disclosure,
FIG. 2 is a functional block diagram of the head mounted display system according to the first embodiment of the present disclosure,
FIG. 3 is a flow chart diagram illustrating a method of switching the head mounted display system between a first-person perspective mode and a third-person perspective mode according to the first embodiment of the present disclosure,
FIG. 4 is a diagram of a head mounted display system according to a second embodiment of the present disclosure,
FIG. 5 is a functional block diagram of the head mounted display system according to the second embodiment of the present disclosure,
FIG. 6 is a flow chart diagram illustrating a method of switching the head mounted display system between a first-person perspective mode and a third-person perspective mode according to the second embodiment of the present disclosure,
FIG. 7 is a diagram of a head mounted display system according to a third embodiment of the present disclosure,
FIG. 8 is a functional block diagram of the head mounted display system according to the third embodiment of the present disclosure,
FIG. 9 is a flow chart diagram illustrating a method of switching the head mounted display system between a first-person perspective mode and a third-person perspective mode according to the third embodiment of the present disclosure,
FIG. 10 is a diagram of a head mounted display system according to a fourth embodiment of the present disclosure,
FIG. 11 is a functional block diagram of the head mounted display system according to the fourth embodiment of the present disclosure, and
FIG. 12 is a flow chart diagram illustrating a method of switching the head mounted display system between a first-person perspective mode and a third-person perspective mode according to the fourth embodiment of the present disclosure.

### Detailed Description

Certain terms are used throughout the description and following claims to refer to particular components. As one skilled in the art will understand, electronic equipment manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to..." In addition, to simplify the descriptions and make it more convenient to compare between each embodiment, identical components are marked with the same reference numerals in each of the following embodiments. Please note that the figures are only for illustration and the figures may not be to scale. Also, the term "couple" is intended to mean either an indirect or direct electrical/mechanical connection. Thus, if a first device is coupled to a second device, that connection may be through a direct electrical/mechanical connection, or through an indirect electrical/mechanical connection via other devices and connections.

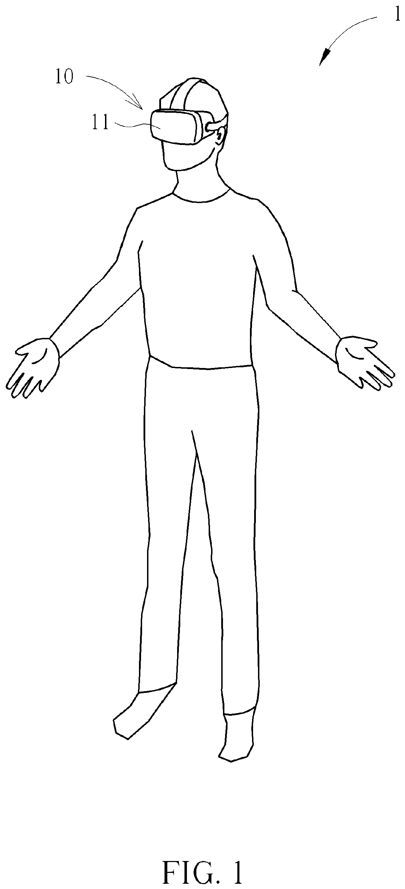

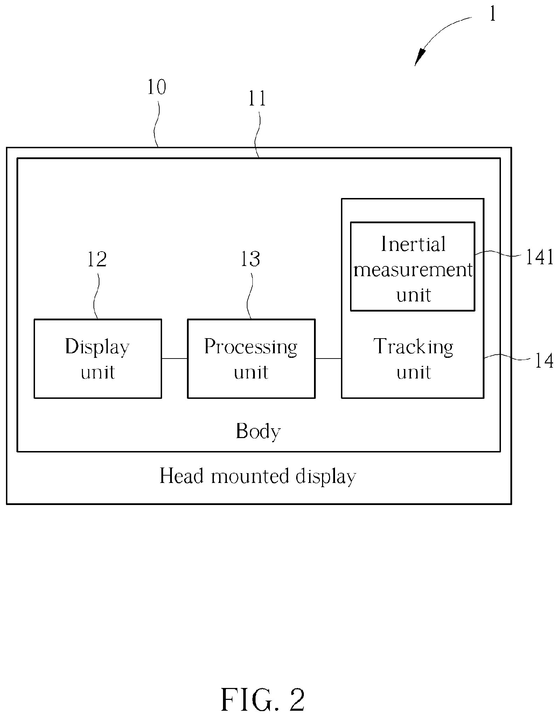

Please refer to FIG. 1 and FIG. 2. FIG. 1 is a diagram of a head mounted display system 1 according to a first embodiment of the present disclosure. FIG. 2 is a functional block diagram of the head mounted display system 1 according to the first embodiment of the present disclosure. As shown in FIG. 1 and FIG. 2, the head mounted display system 1 includes a wearable body 11, which can be worn by a user, a display unit 12, a processing unit 13 and a tracking unit 14.

The display unit 12 can be mounted on a surface of the wearable body 11. The display unit 12 is configured to display a scene of a virtual environment to the user in a first-person perspective mode or in a third-person perspective mode. The display unit 12 can switch from the first-person perspective mode to the third-person perspective mode, and/or to switch from the third-person perspective mode to the first-person perspective mode. In this embodiment, the display unit 12 can be a liquid crystal display (LCD), light-emitting diode (LED) display, an organic light-emitting diode (OLED) display, or any other display. However, the present disclosure is not limited thereto.

The processing unit 13 can be mounted inside the wearable body 11 and coupled to the display unit 12. The processing unit 13 is configured to process data of the display unit 12 and further to generate a switching command in response to an activating command. The switching command indicates the display unit 12 to switch from the first-person perspective mode to the third-person perspective mode, and/or to switch from the third-person perspective mode to the first-person perspective mode. The switching command can be transmitted to a CPU, a GPU, an image processing unit, another part of the processing unit 13 or directly to the display unit 12. In this embodiment, the processing unit 13 can be implemented in software, firmware, hardware configuration, or a combination thereof. For example, the processing unit 13 can be a processor, such as a central processing unit, an application processor, a microprocessor, etc., or may be realized by an application specific integrated circuit (ASIC). However, the present disclosure is not limited thereto.

The tracking unit 14 is configured to track a position, an orientation or a pose of the head mounted display system 1. In this embodiment, the tracking unit 14 can include an inertial measurement unit (IMU) 141 mounted inside the wearable body 11, such as a gyroscope, an accelerometer, a magnetic sensor or a combination thereof, for tracking a position, an orientation or a pose of the wearable body 11 to determine the position, the orientation or the pose of the head mounted display system 1. However, the present disclosure is not limited to this embodiment. The inertial measurement unit can be mounted on a component another than the wearable body.

For example, in another embodiment, the tracking unit 14 can further include a hand sensor, a lower body sensor or an external camera module, and the inertial measurement unit can be mounted the hand sensor, the lower body sensor or the external camera module, for tracking a position, an orientation or a pose of the hand senor, the lower body sensor or the external camera module to determine the position, the orientation or the pose of the head mounted display system 1.

In this embodiment, the tracking unit 14 is configured to collect data for determining generation of the activating command. For example, the activating command can be generated when a tracking result of the tracking unit 14 meets a predetermined condition. However, determination of generation of the activating command is not limited to this embodiment. In another embodiment, which will be described later, the data collected from the tracking unit 14 may not be used to determine generation of the activating command.

Furthermore, in this embodiment, the determination of the generation of the activating command and the generation of the activating command can be performed by the tracking unit. However, the present disclosure is not limited thereto. In another embodiment, the tracking unit can transmit the collected data or the tracking result to the processing unit, and the determination of the generation of the activation command and the generation of the activating command can be performed by processing unit.

Besides, in this embodiment, the display unit 12, the processing unit 13, and the tracking unit 14 are disposed on the wearable body 11. However, the present disclosure is not limited to this embodiment. For example, in another embodiment, the head mounted display system further includes a remote computing apparatus disposed away from the wearable body separately and a communication module disposed on the wearable body for constructing a communication channel to the remote computing apparatus. The remote computing apparatus can be an edge computing device, a cloud computing device, a local host computer, a remote sever, a smartphone, or the like. The communication module can establish a wired connection or a wireless connection between elements on the wearable body and elements on the remote computing apparatus. In this embodiment, the processing unit or the tracking unit can be at least partly disposed on the remote computing apparatus other than the wearable body and/or distributes part of the tasks to the remote computing apparatus, so that the remote computing apparatus can receive the tracking result of the tracking unit or transmit the activating command or the switching command via the communication module, so as to reduce the size and calculation of the wearable body, which makes the wearable body be lightweight and portable.

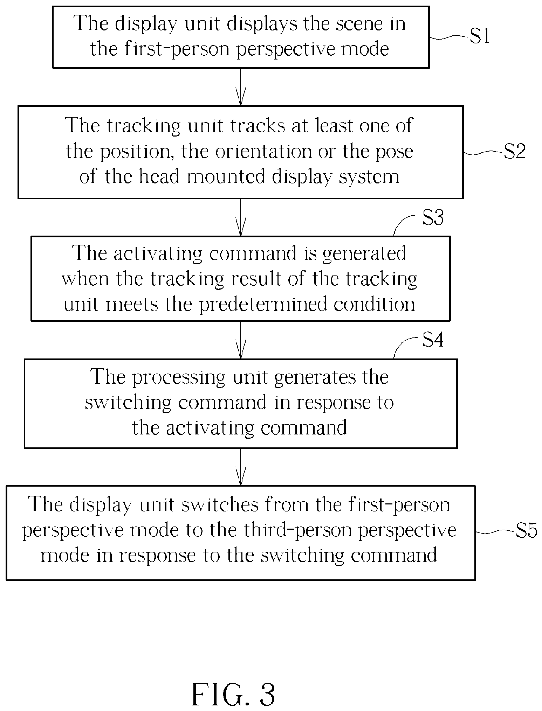

Please refer to FIG. 3. FIG. 3 is a flow chart diagram illustrating a method of switching the head mounted display system 1 between the first-person perspective mode and the third-person perspective mode according to the first embodiment of the present disclosure. As shown in FIG. 3, the method includes the following steps:
S1: The display unit 12 displays the scene in the first-person perspective mode.
S2: The tracking unit 14 tracks at least one of the position, the orientation and the pose of the head mounted display system 1.
S3: The activating command is generated when the tracking result of the tracking unit 14 meets the predetermined condition.
S4: The processing unit 13 generates the switching command in response to the activating command.
S5: The display unit 12 switches from the first-person perspective mode to the third-person perspective mode in response to the switching command.

Detailed description for the steps is provided as follows. In step S1, there can be a virtual camera for capturing images of the virtual environment, and the pose, the position and the orientation of the virtual camera and an eye of an avatar played by the user can be determined based on the pose, the position and the orientation of the head mounted display system 1. Therefore, when the user wears the wearable body 11, the display unit 12 can display the scene in the first-person perspective mode for the user firstly according to the images captured by the virtual camera.

In steps S2 and S3, when the user experiences the virtual environment, the tracking unit 14 can track at least one of the position, the orientation and the pose of the head mounted display system 1 by tracking at least one of the position, the orientation and the pose of the wearable body 11. Furthermore, the activating command is generated when the tracking result of the tracking unit 14 meets the predetermined condition.

In this embodiment, the predetermined condition may be determined according to a relation between the head mounted display system 1 and the avatar played by the user. For example, the predetermined condition can refer to that a difference between a reference position, e.g., an eye position, of the avatar in the virtual environment and a reference position, e.g., a view position, of the head mounted display system 1 in the virtual environment, which is generated according to the position of the wearable body 11 in the real environment and can be a position of the virtual camera, is greater than a predetermined difference.

In detailed, when the avatar played by the user is stopped by or get stuck by an obstruction in the virtual environment, such as a virtual wall, however, the user still keeps moving forward in the real environment, and therefore, the view position of the head mounted display system 1, i.e., the virtual camera, in the virtual environment moves forward along with the forward movement of wearable body 11 in the real environment, which results in inconsistent operation of the user and the avatar played by the user because the eye position of the avatar in the virtual environment does not move. At this moment, the reference position, e.g., the eye position, of the avatar in the virtual environment horizontally departs from the reference position, e.g., the view position, of the head mounted display system 1, i.e., the virtual camera, in the virtual environment, and the activating command is generated when a horizontal difference between the reference position of the avatar in the virtual environment and the reference position of the head mounted display system 1 in the virtual environment is greater than the predetermined difference.

Alternatively, when the avatar is controlled to sit on a virtual chair in the virtual environment, however, the user still keeps standing in the real environment, and therefore, the view position of the head mounted display system 1, i.e., the virtual camera, in the virtual environment does not move downwardly along with the eye position of the avatar. At this moment, the reference position, e.g., the eye position, of the avatar in the environment vertically departs from the reference position, e.g., the view position, of the head mounted display system 1, i.e., the virtual camera, in the virtual environment, and the activating command is generated when a vertical difference between the reference position of the avatar in the environment and the reference position of the head mounted display system 1 in the virtual environment is greater than the predetermined difference.

Furthermore, in a preferred embodiment, the display information of the display unit can be used to determine whether to determine the tracking result of the tracking unit meets the predetermined condition. For example, when the display unit displays the scene normally, it may mean the avatar is in a normal state, and there is no need to determine whether the tracking result of the tracking unit meets the predetermined condition for switching the display unit. On the other hand, when the display unit cannot display the scene normally, e.g., the display unit displays a black or blank screen, it may mean the avatar is in a stopping state or a stuck state, and there is a need to compare the tracking result of the tracking unit with the predetermined condition to determine whether the tracking result of the tracking unit meets the predetermined condition the predetermined condition for switching the display unit.

However, the predetermined condition is not limited thereto. In another embodiment, the pose, the position and the orientation of the virtual camera can be determined based on the position, the orientation and the pose of the eye of the avatar, and the predetermine condition can refer to that a difference between the orientation of the eye of avatar and the orientation of the wearable body is greater than a predetermined difference. For example, the orientation of the eye of the avatar can be represented as (0 degrees, 0 degrees, 0 degrees) when the eye of the avatar looks directly at the floor of the virtual environment and can be represented as (0 degrees, 0 degrees, 180 degrees) when the eye of the avatar looks directly at the ceiling of the virtual environment. However, in the same time, the eye of the user looks forward, and the orientation of the wearable body can be represented as (0 degrees, 0 degrees, 90 degrees), which causes a difference (e.g. 90 degrees) between the orientation of the eye of the avatar and the orientation of the wearable body and results in inconsistency because the orientation of the virtual camera is different from the orientation of the wearable body. Accordingly, the activating command can be generated when the difference is greater than the predetermined difference.

Alternatively, in another embodiment, the predetermined condition can refer to a predetermined orientation or a predetermined pose of the head mounted display system, and the activating command can be generated when the orientation or the pose of the head mounted display system tracked by the tracking unit meets the predetermined orientation or the predetermine pose.

Alternatively, in another embodiment, which will be described later, the tracking unit can further include a camera module, a hand sensor worn on a hand of the user, a lower body sensor worn on a lower body of the user, or a combination thereof for determining a hand gesture of the user, a hand movement of the user or a lower body movement of the user, and the predetermined condition can refer to a predetermined hand gesture, a predetermined hand movement, a predetermined lower body movement, or a combination thereof, and the activating command may be generated when the hand gesture, the hand movement, or the lower body movement of the user tracked by the tracking unit meets the predetermined hand gesture, the predetermined hand movement, or the predetermined lower body movement.

Afterwards, in steps S4 and S5, the processing unit 13 generates the switching command in response to the activating command to indicate the display unit 12 to switch from the first-person perspective mode to the third-person perspective mode in response to the switching command, so as to, for example, help the user to get away from the stopping state or the stuck state of the avatar played by the user, or to understand a current position or a current state of the avatar played by the user in the virtual environment, which significantly enhances user experience. In detail, when the display unit 12 displays the scene of the virtual environment in the third-person perspective mode, the virtual camera is moved to a position other than the eye position of the avatar. For example, the virtual camera can be located right above the avatar for providing a God's eye view, or behind the avatar, so as to capture images of the avatar and the virtual environment nearby.

Understandably, when the display unit 12 displays the scene in the third-person perspective mode, a view point of the third-person perspective mode is adjustable according to the user's demand. For example, in another embodiment, the processing unit can further adjust the view point of the third-person perspective mode. Therefore, the user is allowed to move the view point of the third-person perspective mode freely to see a whole picture. Furthermore, if the aforementioned state of the avatar no longer exists, the display unit can switch from the third-person perspective mode to the first-person perspective mode for enhancing the immersive experience.

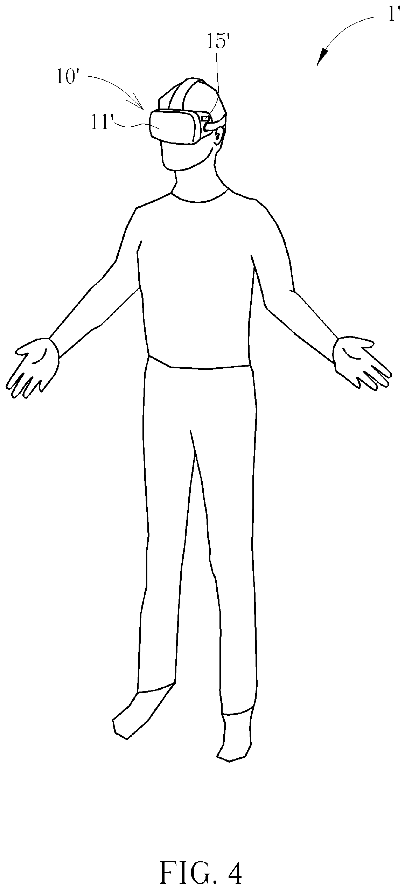

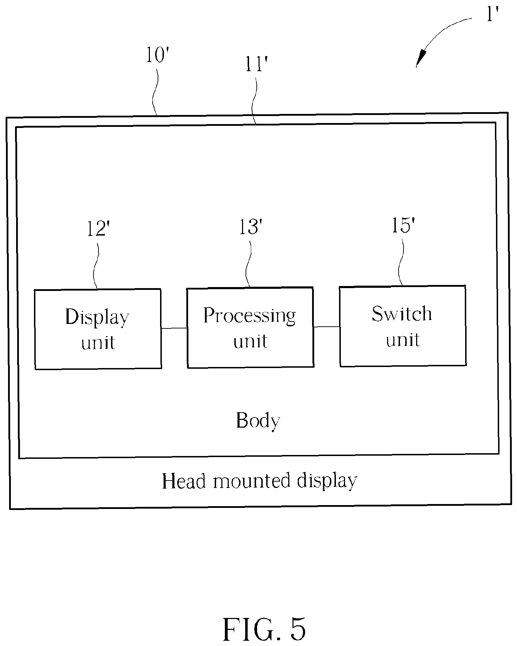

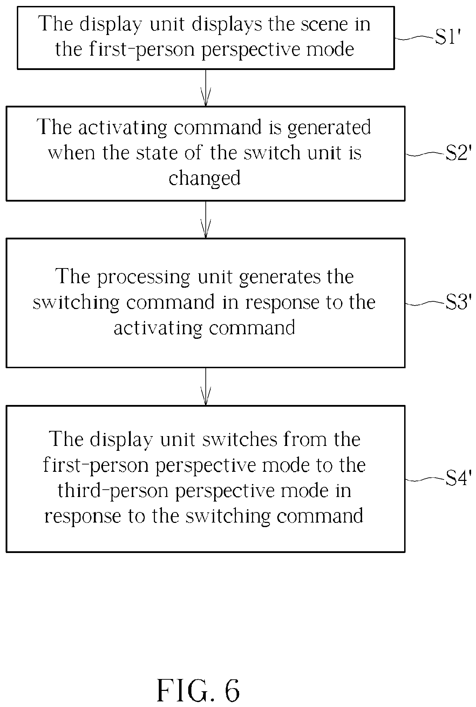

Please refer to FIG. 4 to FIG. 6. FIG. 4 is a diagram of a head mounted display system 1' according to a second embodiment of the present disclosure. FIG. 5 is a functional block diagram of the head mounted display system 1' according to the second embodiment of the present disclosure. FIG. 6 is a flow chart diagram illustrating a method of switching the head mounted display system 1' between a first-person perspective mode and a third-person perspective mode according to the second embodiment of the present disclosure. As shown in FIG. 4 to FIG. 6, different from the head mounted display system 1 of the first embodiment, the head mounted display system 1' of this embodiment includes a wearable body 11', a display unit 12', a processing unit 13' and a switch unit 15'. The display unit 12' is disposed on the wearable body 11'. The processing unit 13' is disposed on the wearable body 11' and coupled to the display unit 12'. The switch unit 15' is disposed on the wearable body 11' and coupled to the processing unit 13' for generating the activating command when a state of the switch unit 15' is changed. In other words, in this embodiment, the user can switch the display unit 12' from the first-person perspective mode to the third-person perspective mode by changing the state of the switch unit 15' according to practical demands. Furthermore, understandably, the user can switch the display unit 12' from the third-person perspective mode to the first-person perspective mode by pressing or clicking the switch unit 15' again. Besides, in this embodiment, the switch unit 15' can be a physical button on the wearable body 11', and the state of the switch unit 15' can be changed by pressing or clicking. However, the present disclosure is not limited thereto. In another embodiment, the switch unit also can be a virtual button on the wearable body or displayed by the display unit and be activated or deactivated by touch operation.

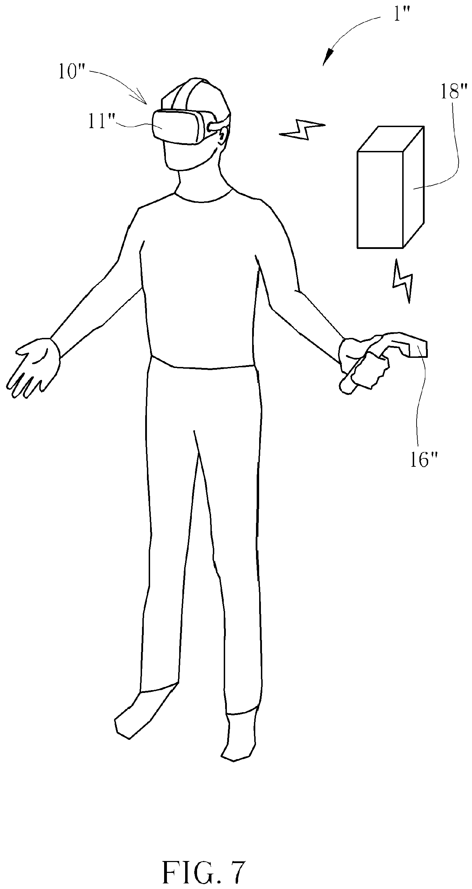

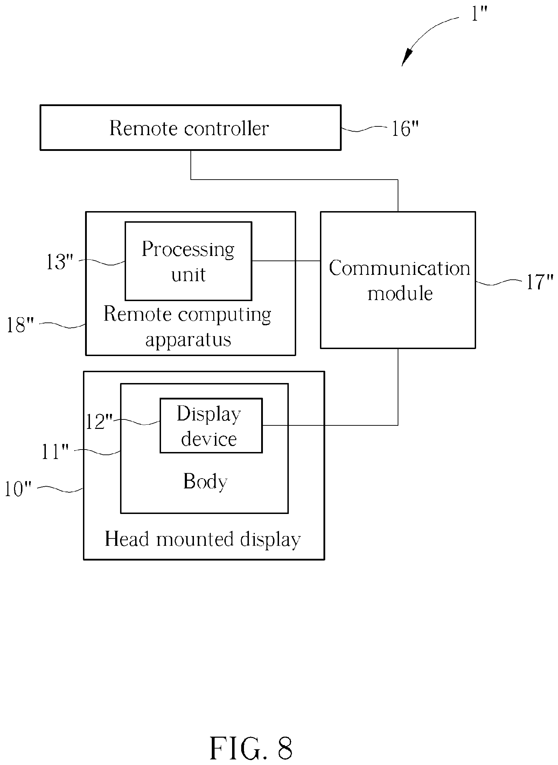

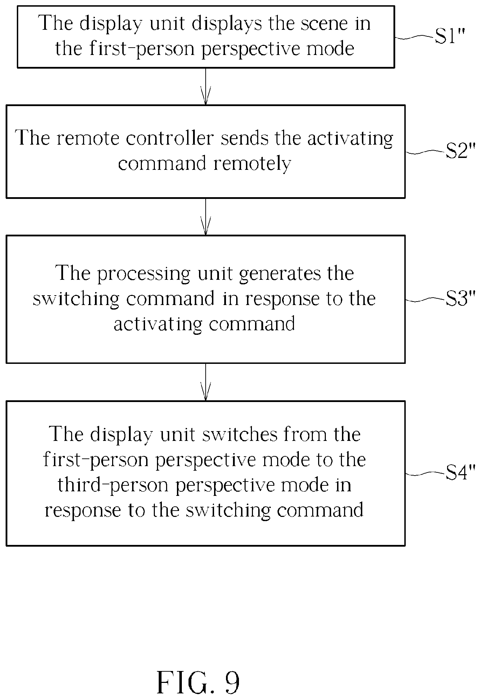

Please refer to FIG. 7 to FIG. 9. FIG. 7 is a diagram of a head mounted display system 1" according to a third embodiment of the present disclosure. FIG. 8 is a functional block diagram of the head mounted display system 1" according to the third embodiment of the present disclosure. FIG. 9 is a flow chart diagram illustrating a method of switching the head mounted display system 1" between a first-person perspective mode and a third-person perspective mode according to the third embodiment of the present disclosure. As shown in FIG. 7 to FIG. 9, different from the head mounted display systems 1, 1' of the aforementioned embodiments, the head mounted display system 1" of this embodiment includes a wearable body 11", a display unit 12" mounted on the wearable body, a processing unit 13", a remote controller 16", a communication module 17" and a remote computing apparatus 18". The processing unit 13" is disposed on the remote computing apparatus 18". The communication module 17" constructs a communication channel among the processing unit 13" on the remote computing apparatus 18", the display unit 12" disposed on the wearable body 11" and the remote controller 16". In other words, the processing unit 13" is coupled to the display unit 12" by the communication module 17" for indicating the display unit 12" to switch between the first-person perspective mode and the third-person perspective mode, and the remote controller 16" is coupled to and communicated with the processing unit 13" by the communication module 17" for generating the activating command when the remote controller 16" is operated and transmit the activating command remotely by the communication module 17" when the activating command is generated. In other words, in this embodiment, the user can switch the display unit 12" from the first-person perspective mode to the third-person perspective mode by sending the activating command with the remote controller 16" according to practical demands. Furthermore, understandably, the user can switch the display unit 12" from the third-person perspective mode to the first-person perspective mode by operating the remote controller 16".

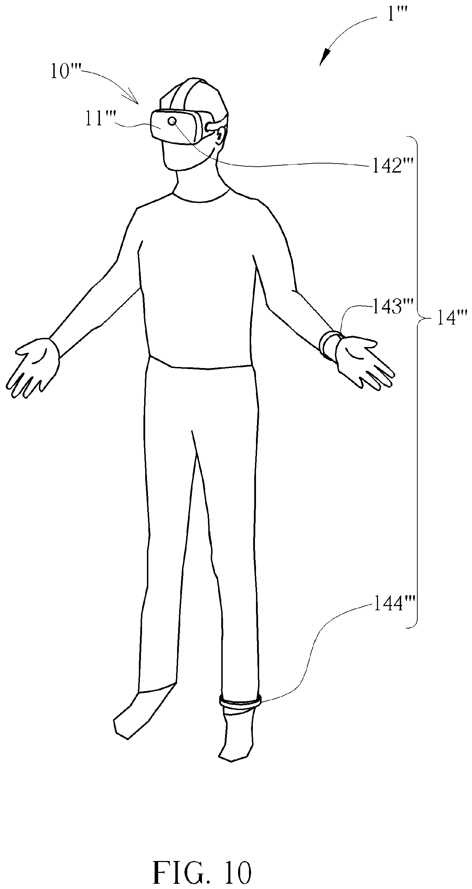

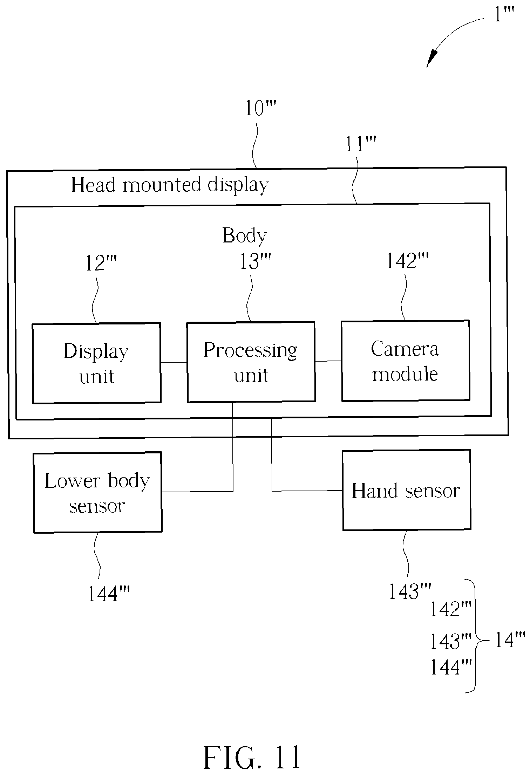

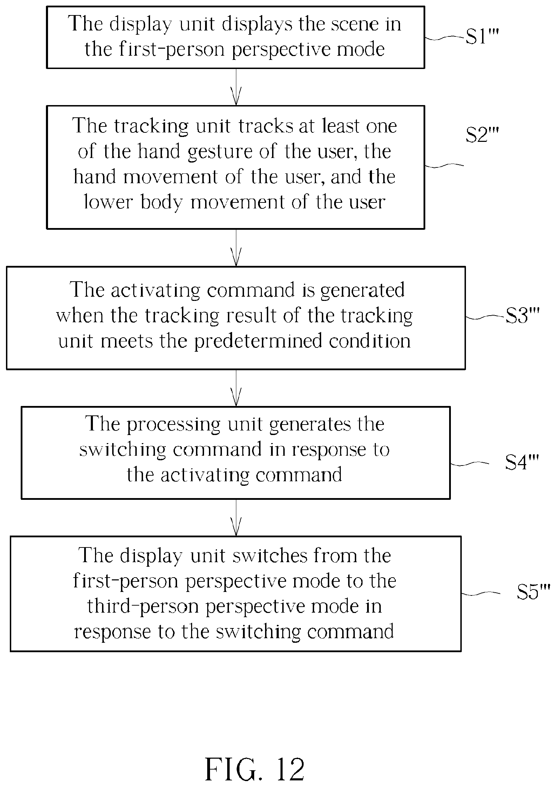

Please refer to FIG. 10 to FIG. 12. FIG. 10 is a diagram of a head mounted display system 1'" according to a fourth embodiment of the present disclosure. FIG. 11 is a functional block diagram of the head mounted display system 1'" according to the fourth embodiment of the present disclosure. FIG. 12 is a flow chart diagram illustrating a method of switching the head mounted display system 1'" between a first-person perspective mode and a third-person perspective mode according to the fourth embodiment of the present disclosure. As shown in FIG. 10 to FIG. 12, different from the head mounted display system 1, 1', 1" of the aforementioned embodiments, the head mounted display system 1'" of this embodiment includes a wearable body 11"', a display unit 12"', a processing unit 13'" and a tracking unit 14"'. The display unit 12'" and the processing unit 13'" are disposed on the wearable body 11'". The processing unit 13'" is coupled to the display unit 12"'. The tracking unit 14'" includes a camera module 142'" coupled to the processing unit 13'" and disposed on the wearable body 11'", a hand sensor 143'" coupled to the processing unit 13'" and worn on the hand of the user, a lower body sensor 144'" coupled to the processing unit 13'" and worn on the lower body of the user for tracking at least one of the hand gesture of the user, the hand movement of the user and the lower body movement of the user, and the predetermined condition may be the predetermined hand gesture, the predetermined hand movement, the predetermined lower body movement, or a combination thereof. For example, the activating command may be generated when the hand gesture, the hand movement or the lower body movement of the user tracked by the tracking unit meets the predetermined hand gesture, the predetermined hand movement, or the predetermined lower body movement. However, the present disclosure is not limited thereto. In another embodiment, the tracking unit may include at least one of the camera module 142"', the hand sensor 143'" and the lower body sensor 144".

Furthermore, the above-described embodiments of the present disclosure can be implemented in software, firmware, hardware configuration, or combination thereof, and it is also possible to provide a non-transitory computer readable storage medium for storing a program that causes a head mounted display system to execute any one of the aforementioned methods by a processor. The processor can be a central processing unit, an application processor, a microprocessor, etc., or may be realized by an application specific integrated circuit (ASIC). The computer-readable recording medium can be a Read-Only Memory (ROM), a random-access memory (RAM), a CD-ROM, a magnetic tape, a floppy disk, or an optical data storage device. However, the present disclosure is not limited thereto.

In contrast to the prior art, the present disclosure utilizes the processing unit for generating the switching command in response to the activating command to indicate the display unit to switch between the first-person perspective mode and the third-person perspective mode. Therefore, it allows the user to switch the display unit between the first-person perspective mode and the third-person perspective mode by different ways to, for example, help the user to get away from a stopping state or a stuck state of the avatar played by the user, or to understand the current position or the current state of the avatar played by the user in the virtual environment, which significantly enhances user experience.

Those skilled in the art will readily observe that numerous modifications and alterations of the device and method may be made while retaining the teachings of the disclosure. Accordingly, the above disclosure should be construed as limited only by the metes and bounds of the appended claims.

## Claims

1. A head mounted display system (1, 1', 1", 1"') comprising:
a wearable body (11, 11', 11", 11"') configured to be worn by a user; and
**characterized in that** the head mounted display system (1, 1', 1", 1'") further comprises:
a display unit (12, 12', 12", 12"') mounted on the wearable body (11, 11', 11", 11'") and configured to display a scene in a first-person perspective mode or in a third-person perspective mode; and
a processing unit (13, 13', 13", 13'") coupled to the display unit (12, 12', 12", 12'") and configured to generate a switching command in response to an activating command, wherein the switching command indicates the display unit (12, 12', 12", 12'") to switch from the first-person perspective mode to the third-person perspective mode, or to switch from the third-person perspective mode to the first-person perspective mode.

2. The head mounted display system (1') of claim 1, **characterized in that** the head mounted display system (1') further comprises:
a switch unit (15') coupled to the processing unit (13') and for generating the activating command when a state of the switch unit (15') is changed.

3. The head mounted display system (1") of claim 1, **characterized in that** the head mounted display system (1") further comprises:
a remote controller (16") communicated with the processing unit (13") for generating the activating command.

4. The head mounted display system (1, 1'") of claim 1, **characterized in that** the head mounted display system (1, 1'") further comprises:
a tracking unit (14, 14'") coupled to the processing unit (13, 13'") and configured to track at least one of a position of the head mounted display system (1, 1"'), a pose of the head mounted display system (1, 1"'), an orientation of the head mounted display system (1, 1"'), a hand gesture of the user, a hand movement of the user and a lower body movement of the user;
wherein the activating command is generated when a tracking result of the tracking unit (14, 14"') meets a predetermined condition.

5. The head mounted display system of claim 4, **characterized in that** display information of the display unit is used to determine whether to determine the tracking result of the tracking unit meets the predetermined condition.

6. The head mounted display system (1") of any one of claims 1 and 3, **characterized in that** the head mounted display system (1") further comprises:
a remote computing apparatus (18") not disposed on the wearable body (11"); and
a communication module (17") disposed on the wearable body (11") for constructing a communication channel to the remote computing apparatus (18").

7. The head mounted display system (1") of claim 6, **characterized in that** the processing unit (13") is at least partly disposed on the remote computing apparatus (18").

8. A method of switching a head mounted display system (1, 1', 1", 1'") between a first-person perspective mode and a third-person perspective mode, **characterized in that** the method comprises:
utilizing a display unit (12, 12', 12", 12'") of the head mounted display system (1, 1', 1", 1'") to display a scene in the first-person perspective mode or in the third-person perspective mode; and
utilizing a processing unit (13, 13', 13", 13'") of the head mounted display system (1, 1', 1", 1'") to generate a switching command in response to an activating command to indicate the display unit (12, 12', 12", 12'") to switch from the first-person perspective mode to the third-person perspective mode, or to switch from the third-person perspective mode to the first-person perspective mode.

9. The method of claim 8, **characterized in that** the method further comprises:
utilizing a switch unit (15') of the head mounted display system (1') to generate the activating command when a state of the switch unit (15') is changed.

10. The method of claim 8, **characterized in that** the method further comprises:
utilizing a remote controller (16") of the head mounted display system (1") to generate the activating command when the remote controller (16") is operated.

11. The method of claim 8, **characterized in that** the method further comprises:
utilizing a tracking unit (14, 14'") of the head mounted display system (1, 1'") to track at least one of a position of the head mounted display system (1, 1"'), a pose of the head mounted display system (1, 1"'), an orientation of the head mounted display system (1, 1"'), a hand gesture of a user, a hand movement of the user and a lower body movement of the user; and
generating the activating command when a tracking result of the tracking unit (14, 14'") meets a predetermined condition.

12. The method of claim 11, **characterized in that** the method further comprises:
determining whether to determine the tracking result of the tracking unit meets the predetermined condition according to display information of the display unit.

13. A non-transitory computer readable storage medium **characterized in that** the non-transitory computer readable storage medium stores a program that causes the head mounted display system (1, 1', 1", 1'") to execute the method of any one of claims 8 to12.
